**Europäisches Patentamt**

**European Patent Office**

**Office européen des brevets**

(11) Numéro de publication : **0 104 108 B2**

(12)         NOUVEAU FASCICULE DE BREVET EUROPEEN

(45) Date de publication du nouveau fascicule du brevet : **16.12.92 Bulletin 92/51**

(51) Int. Cl.⁵ : **B62K 25/00**

(21) Numéro de dépôt : **83401725.3**

(22) Date de dépôt : **30.08.83**

(54) **Dispositif de bras support d'une roue motrice.**

(30) Priorité : **17.09.82 FR 8215728**

(43) Date de publication de la demande :
**28.03.84 Bulletin 84/13**

(45) Mention de la délivrance du brevet :
**15.03.89 Bulletin 89/11**

(45) Mention de la décision concernant
l'opposition :
**16.12.92 Bulletin 92/51**

(84) Etats contractants désignés :
**AT CH DE GB LI NL SE**

(56) Documents cités :
**DE-B- 1 132 461
DE-C- 964 932
FR-A- 2 380 181**

(56) Documents cités :
**GB-A- 825 977
US-A- 4 170 369
Extrait catalogue Guzzi - 1962, Dessins Guzzi
42400 et 42420
Revue "Moto Sprint", N. 39 - 1980
Revue "Moto Sprint", N. 39 - 1981
Revue "Moto Sprint", N. 2 - 1984
Revue "Moto Technica", N. 6 - juin 1989**

(73) Titulaire : **ELF FRANCE
2 place de la Coupole La Défense 6
F-92400 Courbevoie (FR)**

(72) Inventeur : **de Cortanze, André
12 bis, rue Dailly
F-92210 St. Cloud (FR)**

(74) Mandataire : **Hirsch, Marc-Roger
Cabinet Hirsch 34 rue de Bassano
F-75008 Paris (FR)**

EP 0 104 108 B2

Jouve, 18, rue Saint-Denis, 75001 PARIS

## Description

La présente invention se rapporte à un bras support de la roue motrice d'un véhicule doté d'une suspension dont le débattement s'effectue par rotation du bras autour d'un axe de liaison avec le châssis du véhicule.

De telles suspensions sont utilisées maintenant de façon courante dans les véhicules automobiles et l'entraînement en rotation de la roue motrice s'effectue habituellement à l'aide d'un arbre traversant le bras support et relié à un organe moteur par l'intermédiaire d'un joint à cardan ou homocinétique permettant d'absorber les débattements du bras en rotation qui induisent des variations de longueur et d'inclinaison de l'arbre.

Lorsque l'on désire appliquer une telle suspension de roue motrice à un motocycle, la solution qui est généralement proposée consiste à relier la roue à un arbre support monté sur le bras par des paliers et solidaire d'une couronne d'engrenage conique qui est reliée mécaniquement au moteur d'entrainement par un arbre porté par le bras et solidaire, lui, d'un pignon conique engrenant avec la couronne conique. DE-B-1 132 461 décrit un dispositif de bras carter de transmission pour la roue motrice d'un véhicule tel que le bras tiré de suspension arrière d'un motocycle, tourillonnant sur un axe creux solidaire du châssis pour coopérer avec des blocs déformables réalisant la suspension du châssis du véhicule par rapport à la roue qui est fixée d'un côté du bras carter, de façon aisément amovible par des boulons, à un axe support traversant ce bras de part en part sur deux paliers tandis qu'un pignon d'entraînement de la roue est fixé à l'axe support de l'autre côté du bras de façon à permettre un démontage aisé de la roue sur le côté du bras support sans avoir à intervenir sur les moyens d'entrainement de la roue.

Un tel assemblage est fiable mais les liaisons mécaniques entre le moteur et la roue motrice sont difficiles et onéreuses à réaliser.

L'un des buts de la présente invention est précisément de permettre de réaliser une suspension de la roue arrière motrice d'un motocycle à l'aide d'un bras de support rotatif tout en permettant l'entraînement de cette roue motrice par une chaine qui constitue jusqu'à présent le moyen d'entraînement le plus simple et le plus fiable pour les cycles et les motocycles, car il est apte à supporter des désaxages et des variations d'entraxes relativement importants.

Ce but est réalisé par les caractéristiques de la revendication 1.

La roue peut être solidaire, au moins lorsqu'elle est fixée à l'axe support, d'un disque de frein coopérant avec un organe de serrage de ce disque tel qu'un étrier de frein, fixé audit bras support. En variante, le disque de frein est fixé à l'axe support et la roue est fixée au moyeu du disque de frein.

Selon un autre mode de réalisation du bras de support selon l'invention, les deux paliers à forte rigidité, supportant l'axe support de la roue et des moyens d'entrainement, sont rendus chacun rigidement solidaire d'un alésage de réception ménagé dans ce bras au moyen d'une fente latérale du bras débouchant dans cet alésage et dont les deux bords sont susceptibles d'être rapprochés par des moyens de serrage, de préférence réglables, tels qu'un collier de serrage ou au moins une vis ou un boulon traversant cette fente.

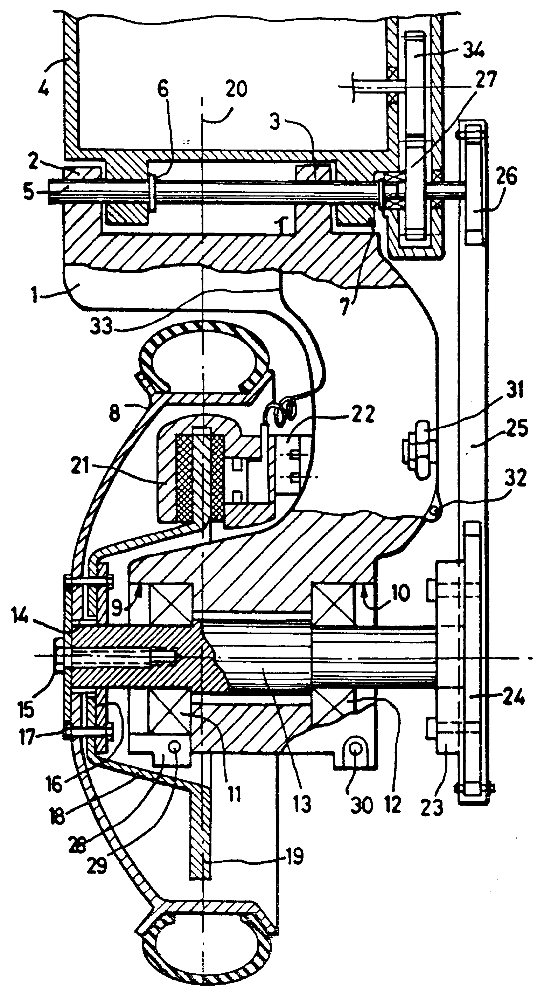

D'autres buts, avantages et caractéristiques de l'invention apparaîtront à la lecture de la description d'un mode de réalisation de l'invention, faite à titre non limitatif et en regard du dessin annexé où la figure unique représente, en coupe et en vue de dessus, le bras de support de la roue arrière motrice d'un motocycle.

Le bras de support 1 est relié par des bossages 2 et 3 au carter moteur 4 d'un motocycle par l'intermédiaire d'un axe de liaison 5 qui traverse des bossages conjugués de ce carter. L'axe de liaison 5 est maintenu en position par rapport au carter 4 par tout moyen tel qu'un circlip 6 combiné à la butée sur un axe de pignon et coopérant avec une face latérale des bossages 7 du carter 4.

Le bras de support 1 présente en vue de dessus, comme représenté, la forme générale d'un U afin de permettre à la jante et au pneumatique de la roue arrière 8 du motocycle de venir se loger à l'intérieur des branches du U tout en bénéficiant d'une robuste articulation sur le carter moteur 4.

A son extrémité libre opposée à l'articulation sur l'axe 5, le bras 1 comporte des alésages 9 et 10 débouchant sur chacune de ses faces latérales et dans chacun desquels est logé un palier résistant tel qu'un roulement à rouleaux coniques, respectivement 11 et 12 de guidage d'un axe de support 13, traversant le bras 1 de part en part. Du côté gauche de la figure, l'axe 13 est relié, par l'intermédiaire de cannelures 14 et d'une vis de serrage 15, à la roue 8. L'axe 13 porte généralement, du côté gauche de la figure, un flasque 16 sur lequel est monté par des goujons 17 (qui, en variante, peuvent être aussi utilisés comme goujons de serrage de la roue), le moyeu 18 d'un disque de frein 19.

Le disque de frein 19 est monté sensiblement dans l'axe longitudinal 20 du motocycle qui, pour limiter la torsion du bras 1 et les réactions au freinage, se confond également avec le plan moyen transversal de la roue. Le disque 19 coopère avec un étrier de serrage des freins 21 qui est fixé sur une patte d'attache 22 solidaire du bras 1.

Du côté droit de la figure, l'axe de support 13 est fixé par un flasque amovible 23 à un pignon de chaîne mené 24 relié par sa chaine 25 à un pignon de chaine menant 26 solidaire, par exemple, d'un engrenage d'entrainement 27 logé dans le carter 4. Le pignon moteur 26 est sensiblement coaxial à l'axe de liaison 5 de telle façon, qu'au cours de la rotation du bras support 1 autour de cet axe 8 par suite du débattement de la suspension du motocycle, l'entraxe des pignons de chaine 24 et 26 ne varie pratiquement pas.

Dans chacun des alésages 9 et 10 de guidage des roulements à rouleaux 11 et 12, débouche une fente latérale 28 qui permet d'assurer le serrage de la paroi de cet alésage 9 et 10 sur les roulements 11 et 12 à l'aide d'un boulon ou d'une vis de serrage 29 ou 30 respectivement. Le bras 1 porte également des bossages de liaison 31 et 32 pour le rattachement respectivement à un ressort de suspension et à un moyen d'amortissement non représentés et une conduite de freinage 33 reliée au carter 4 par une conduite flexible à cause des débattements du bras.

Si l'on se reporte à la figure, on voit que sous les effets conjugués de la charge appliquée à la roue 8 et des forces de réaction de la suspension non représentée, le bras 1 accompagné de la roue 8 peut tourner autour de l'axe de liaison 5, toutes les réactions de la roue 8 étant reportées sur cet axe 5. La forme en U du bras de suspension enveloppe bien l'étrier de frein 21 et la roue 8 pour réduire l'encombrement du train arrière du véhicule.

En cas d'incident sur la roue tel qu'une crevaison, il suffit de dévisser la vis 15 pour pouvoir extraire la roue 8 instantanément. Après extraction de la roue 8, il est possible également de basculer l'étrier de frein 21 et de déposer très rapidement le disque de frein 19. Une telle amélioration de l'accessibilité de la roue et des freins est particulièrement appréciée en course, mais contribue aussi à réduire les frais d'entretien sur les véhicules courants. De même pour le pignon de chaîne mené 24, il est possible de le déposer de son flasque de fixation 23 en dévissant les vis ou boulons de fixation qui l'y maintiennent. Le pignon mené 24 peut être mis en place avec la chaîne 25 engagée sur les deux pignons 24 et 26, ce qui simplifie le montage et supprime les problèmes de tension de la chaîne. On doit noter que le système de bras support selon l'invention fonctionne correctement lorsque le pignon 26 n'est pas disposé directement coaxial avec l'axe de liaison 5, et est, par exemple, monté coaxial à un pignon intermédiaire 34. Dans un tel cas, il suffit que la chaîne 25 soit montée avec un jeu normal pour qu'elle soit à même d'absorber, en plus des désaxages, les légères variations d'entraxe causées par la rotation limitée du bras 1 autour de l'axe de liaison 5.

## Revendications

1. Dispositif de bras support rotatif pour la roue motrice (8) d'un véhicule, susceptible de se débattre par rotation autour d'un axe de liaison solidaire du châssis (4) ou de la caisse du véhicule pour coopérer avec des moyens de suspension et/ou d'amortissement afin de réaliser la suspension de la caisse ou du châssis du véhicule par rapport à la roue et tel que le bras tiré de suspension arrière d'un motocycle, la roue étant fixée d'un côté du bras support, de façon aisément amovible par tout moyen adéquat tel qu'au moins un boulon ou une vis de fixation, à un axe support traversant ce bras de part en part sur deux paliers à forte rigidité, tels que des paliers à rouleaux coniques tandis qu'un pignon d'entrainement de la roue est fixé à l'axe support de l'autre côté du bras de façon à permettre un démontage aisé de la roue sur le côté du bras support sans avoir à intervenir sur les moyens d'entrainement de la roue, le bras support (1) présentant en vue de dessus la forme d'un U enveloppant une section transversale de la roue (8) rendue solidaire, au moins lorsqu'elle est fixée à l'axe support (13) traversant le bras (1), d'un disque de frein (19) qui coopère avec un organe de serrage de ce disque tel qu'un étrier de frein (21), caractérisé en ce que le disque de frein (19) est monté dans le plan moyen (20) de la roue (8) de manière à limiter le couple de torsion du bras (1) sous l'effet des efforts de réaction que lui applique la roue (8) et l'étrier de frein (21) au cours du freinage et en ce que les deux paliers à roulement à forte rigidité (11, 12) supportant l'axe support (13) de la roue (8) sont rendus chacun rigidement solidaires d'un alésage de réception (9, 10) ménagé dans ce bras, au moyen d'une fente latérale (28) du bras débouchant dans cet alésage et dont les deux bords sont susceptibles d'être rapprochés par des moyens de serrage réglables.

2. Dispositif selon la revendication 1, caractérisé en ce que l'axe de support (13) est relié d'une part à la roue (8) par l'intermédiaire de cannelures (14) et, d'autre part, au moyeu (18) du disque de frein (19) par l'intermédiaire d'un flasque (16).

3. Dispositif selon la revendication 1, caractérisé en ce que l'axe support (13) comporte un flasque (16) sur lequel sont montés par des boulons ou des goujons (17) la roue (8) et le moyeu (18) du disque de frein (19) placé à l'intérieur de la roue, sensiblement dans le plan transversal (20) de la roue (8).

## Patentansprüche

1. Vorrichtung mit einem schwenkbaren Haltearm für das Antriebsrad (8) eines Fahrzeuges, die durch Drehung um eine mit dem Chassis (4) oder dem Kasten des Fahrzeugs fest verbundene Verbindungsachse ausgelenkt werden kann, um mit Aufhängungs- und oder Dämpfungsmitteln zusammenzuwirken, um die Aufhängung des Kastens oder Chassis des Fahrzeugs in bezug auf das Rad zu verwirklichen, z.B. der hintere gezogene Aufhängungsarm eines Motorrades, wobei das Rad leicht abnehmbar auf einer Seite des Haltearms mit jedem geeigneten Mittel, wie mit mindestens einer Durchsteckschraube mit Mutter oder einer Befestigungsschraube, auf einer Halteachse, welche diesen Arm auf zwei Lager grosser Steifigkeit, wie Kegelrollenlagern, vollständig durchsetzt, befestigt ist, während ein Antriebszahnrad des Rades auf der Halteachse auf der anderen Seite des Armes befestigt ist, derart, dass ein leichter Ausbau des Rades auf der Seite des Haltearmes ermöglicht wird, ohne in die Antriebsmittel des Rades eingreifen zu müssen, wobei der Haltearm (1) in Draufsicht die Form eines U darstellt, das eine in der Mitte liegende Querschnittebene des Rades (8) umgreift, welches, zumindest wenn es auf der Halteachse (13), welche den Arm (1) durchsetzt, befestigt ist mit einer Bremsscheibe (19) die mit einem Klemmelement dieser Scheibe, wie einem Bremssattel (21) zusammenwirkt, dadurch gekennzeichnet, dass die Bremsscheibe (19) in der Querschnittebene (20) des Rades (8) angebracht ist, derart, dass der Torsionsmoment des Armes (1) unter der Einwirkung von durch das Rad (8) und den Bremssattel auf ihn während dem Bremsen ausgeübten Reaktionskräften gering gehalten wird, und dadurch, dass die zwei Rollenlager (11, 12) grosser Steifigkeit die die Halteachse (13) des Rades (8) tragen, jeweils mit einer in diesem Arm ausgesparten Aufnahmebohrung (9, 10) mit Hilfe eines seitlichen Schlitzes (28) des Armes starr verbunden sind wobei dieser Schlitz in diese Bohrung mündet dessen beide Ränder durch einstellbare Klemmmittel einander näher gebracht werden können.

2. Vorrichtung nach Anspruch 1, dadurch gekennzeichnet, dass die Halteachse (13) einerseits mit dem Rad (8) über Zahnriffeln (14) und andererseits mit der Nabe (18) der Bremsscheibe (19) über einen Flansch (16) verbunden ist.

3. Vorrichtung nach Anspruch 1, dadurch gekennzeichnet, dass die Halteachse (13) einen Flansch (16) aufweist, auf dem mit Durchsteckschrauben oder Bolzenschrauben (17) das Rad (8) und die Nabe(18) der Bremsscheibe (19), welche auf der Innenseite des Rades im wesentlichen in der Querebene (20) des Rades (8) angebracht ist, eingebaut werden.

## Claims

1. An oscillating supporting arm assembly for the driving wheel (8) of a vehicle, adapted to oscillate angularly about a connecting shaft rigidly fixed to the chassis (4) or the body of the vehicle to cooperate with suspension and/or shock absorbing means to provide suspension or of the body or chassis with respect to the wheel, such as the rear swinging arm suspension of a motorcycle, said wheel being fixed at one side of a supporting arm, so as to be easily removable by any appropriate means such as at least one stud or fixing screw, to a supporting shaft extending through said arm on high-rigidity bearings, such as conical roller bearings, a drive sprocket of the wheel is fixed to the supporting shaft at the other side of the arm so as to allow easy dismantling of the wheel at the side of the support arm without having to intervene in the driving means of the wheel, the said support arm (1) when seen in top view being U-shaped and surrounding a cross-section of the wheel (8), said wheel being rendered integral, at least when it is fixed to the supporting shaft (13) extending through said arm (1) of a brake disc (19) which cooperates with an element for gripping said disc such as a brake caliper (21) characterized in that the brake disc is mounted in the median plane of the wheel so as to limit the twisting couple of the arm (1) under the effect of the reaction applied thereto by said wheel (8) and brake calliper (21) during braking and in that the two bearings (11, 12) having high rigidity that support the supporting shaft (13) of the wheel (8) are each rendered rigidly integral with a receiving bore (9, 10) provided in said arm, by means of a lateral slot (28) of the arm opening into this bore and the two sides of which are adapted to be moved closer together by adjustable tightening means.

2. Device according to claim 1, characterized in that the supporting shaft (13) is connected, on the one hand to the wheel (8) via splines (14) and, on the other hand, to the hub (18) of the brake disc (19) by a back plate (16).

3. Device according to claim 1, characterized in that the supporting shaft (13) carries a back plate (16) upon which the wheel (8) and the hub (18) of the brake disc (19) are mounted by means of bolts or studs, said brake disc being located inside the wheel (8) substantially in the transverse plane (20) thereof.